# EUROPÄISCHE PATENTSCHRIFT

(11) **EP 1 339 576 B1**
(45) Veröffentlichungstag und Bekanntmachung des Hinweises auf die Patenterteilung: **14.06.2006**
(21) Anmeldenummer: 01992489.3
(22) Anmeldetag: 24.10.2001
(51) Int. Cl.: B60T 7/04, B60T 11/20, F15B 15/28

(54) **IN EINEN HAUPTZYLINDER INTEGRIERTER SIGNALGEBER MIT HALL-SENSOR**
SIGNAL TRANSMITTER COMPRISING A HALL SENSOR INTEGRATED IN A MASTER CYLINDER
EMETTEUR DE SIGNAUX COMPORTANT UN CAPTEUR DE HALL, INTEGRE DANS UN MAITRE-CYLINDRE

(30) Priorität: 31.10.2000 DE 10053995
(43) Veröffentlichungstag der Anmeldung: 03.09.2003
(73) Patentinhaber: Continental Teves AG & Co. oHG, 60488 Frankfurt am Main (DE)
(72) Erfinder: FEIGEL, Hans-Jörg, 61191 Rosbach (DE); JAKOBI, Ralf, 65439 Flörsheim (DE); WAGNER, Wilfried, 35625 Hüttenberg (DE); MERKEL, Dieter, 64285 Darmstadt (DE); KNEWITZ, Ingo, 61267 Neu Anspach (DE)
(86) Internationale Anmeldenummer: PCT/EP2001/012269
(87) Internationale Veröffentlichungsnummer: WO 2002/036400

(56) Entgegenhaltungen:
- EP-A- 0 620 372
- DE-A- 19 915 832
- US-A- 4 914 916
- US-A- 5 095 702

## Beschreibung

Für viele Steuerungsvorgänge und Warnvorgänge ist es wichtig, die aktuelle Lage eines Betätigungsgliedes zu kennen. So ist beispielsweise die Stellung eines Bremspedals oder dessen Bewegung kennzeichnend für den Wunsch des Fahrers das Fahrzeug abzubremsen. Dabei kann sowohl der Verlauf der Bewegung des Bremspedals als auch dessen Stellung einen Hinweis darauf geben, wie stark der Fahrer das Fahrzeug abbremsen möchte. Es wurden daher schon Vorschläge gemacht, mit Hilfe von Sensoren die Lage, den Weg oder die Wegänderung des Bremspedals zu messen. Die gemessenen Werte werden dann in die Regeleinrichtung eines Bremssystem eingeführt. Die gemessenen Werte können weiterhin aber auch einer Lichtanzeige zugeführt werden, die den anderen Verkehrsteilnehmern die Betätigung der Bremse eines Fahrzeuges anzeigt. Heute übliche Bremslichtschalter sind somit am Pedal angeordnet. Nachteilig ist die elektrische Verbindung in diesem Bereich. Ebenso von Nachteil ist, daß diese Art von Schalter nicht besonders zuverlässig ist. Es sind auch im THz angeordnete Druckschalter vorgeschlagen worden, die als Bremslichtschalter eingesetzt werden. Nachteilig ist, daß das Signal recht spät kommt.

Aus der DE-OS 19915832 ist es bekannt, einen hydraulischen Geberzylinder mit einem Hall-Element zu versehen, wobei an dem Zylinder der Hall-Sensor und an dem Kolben ein Ringmagnet angebracht ist. Der Hall-Schalter gibt bei einer definierten Stellung des Kolbens ein Schaftsignal ab. Die vorliegende Erfindung geht daher aus von einem Bremssystem der sich aus dem Oberbegriff des Hauptanspruchs ergebenden Gattung. Aufgabe der Erfindung ist es, ein Bremssystem bereitzustellen, beiden Schnell und verschleißfrei ein Signal zur Verfügung gestellt werden kann, welches den Bewegungsverlauf des Bremspedals als auch dessen Stellung beschreibt.

Die Aufgabe wird durch die sich aus dem kennzeichnenden Teil des Hauptanspruchs ergebende Merkmalskombination gelöst. Ein besonderer Vorteil der Erfindung liegt unter anderem aber auch darin, daß eine Anzeige auch dann gewährleistet ist, wenn die Bremse durch die Bewegung des Kolbens im Hauptzylinder betätigt wird, ohne daß dies notwendigerweise der Stellung des Pedals entspricht. Dies kann beispielsweise auftreten, wenn aufgrund von Toleranzen oder Verlustwegen der Weg des Pedals nicht mit dem Weg des Kolbens im Hauptzylinder identisch ist. Eine andere Möglichkeit besteht darin, daß die Bremse in dem geregelten Bremssystem ausgelöst wird, ohne daß das Pedal betätigt wird (ABS, ESP). Weitere Vorteile der Erfindung bestehen in folgendem: Hohe Sicherheit, Messung des Bewegungsstarts im Tandem-Hauptzylinder (THz) und damit ein direkt plausibles Signal. Weiterhin ist die Zugänglichkeit im Fahrzeug sehr hoch. Es besteht weiterhin eine Justiermöglichkeit auch nachträglich. Das erfindungsgemäße Bremssystem ist kostengünstig und es gibt keine störenden Kräfte am Pedal.

Die Erfindung ist nicht notwendig auf die Schaltung eines Bremslichts begrenzt, es sind auch andere Anwendungsfälle denkbar, in denen kostengünstig die Lage eines Kolbens in einem Zylinder zur Ansteuerung nachgeschalteter Anordnungen ausgewertet werden soll. Es wird einem Steuergerät bzw. mehreren Steuergeräten (ABS oder sonstiges) ein Signal zur Verfügung gestellt, welches in direktem Zusammenhang zur Bewegung eines THz⁻Kolbens und somit auch des Bremspedales steht. Dieses Signal kann vorzugsweise zum Schalten der Bremslichter verwendet werden.

Für den Aufbau des Sensors innerhalb des Hauptzylinders gibt es mehrere Möglichkeiten. So kann beispielsweise in der Wand des Gehäuses der Magnet neben dem Hall- Element angeordnet werden. Dieses ist beispielsweise dann möglich, wenn der Kolben aus einem magnetischen werkstoff besteht oder örtlich mit einem derartigen Werkstoff versehen ist. Ändert der Kolben seine Lage so wird auch das zwischen dem Magneten und dem Hall-Element bestehende Magnetfeld verändert, wodurch eine Anzeige ausgelöst werden kann. In vorteilhafter Weiterbildung empfiehlt sich aber besonders die Merkmalskombination nach Anspruch 2. Hierbei ist der magnetische Bezirk an der Außenfläche des Kolbens wirksam. Dabei kann dieser Bezirk durch örtliches Magnetisieren des Kolbens geschaffen werden, so weit dieser Kolben aus einem magnetisierbaren Material besteht. Die örtliche Magnetisierung kann aber auch dann eingesetzt werden, wenn der magnetische Bezirk in dem Gehäuse des Zylinders in der Nähe des Hall-Elements angebracht ist.

Eine besonders einfache Lösung ergibt sich hier durch die Anwendung der Merkmalskombination nach Anspruch 3. In diesem Fall kann der Kolben auch aus einem nicht magnetisierbaren Material bestehen, wie beispielsweise Kunststoff oder Aluminium. Weiterhin lassen sich so sehr hohe Magnetfelder erzeugen, die örtlich auf das zugeordnete Hall-Element wirken können.

In Weiterbildung der Erfindung können entsprechend Anspruch 4 nicht nur der Kolben, sondern auch das Gehäuse aus einem nicht magnetisierbaren Material angefertigt sein. Hierdurch wird der Verlauf des Magnetfeldes nicht durch das Material der Kolben-Zylinder-Anordnung gestört.

Eine erhebliche Verbesserung des erfindungsgemäßen Stellungsgebers läßt sich in Weiterbildung der Erfindung durch die Maßnahmen nach Anspruch 5 erreichen. Hierdurch werden sowohl das Hall-Element als auch der Magnet von Druckkräften freigehalten, so daß die mechanische Belastung dieser in die Anordnung eingefügten Teile gering bleibt. Ein weiterer Vorteil dieser Maßnahme besteht darin, dass die Schwächung des Gehäuses durch das Einfügen einer Aufnahmebohrung für einen Stecker ohne Nachteile bleibt, da der betroffene Abschnitt des Zylindergehäuses weitgehend frei von Druckkräften ist.

Um den Hall-Sensor möglichst leicht an die unterschiedlichen Fahrzeugtypen anpassen zu können und um den Austausch eines fehlerhaften Sensors zu erleichtern, empfiehlt sich in Weiterbildung der Erfindung die Merkmalskombination nach Anspruch 6. Es ist also durch Austausch eines Steckers leicht möglich, gleichzeitig das Hall-Element und die Auswertungschaltung an die Parameter des Fahrzeugtyps anzupassen bzw. die genannten Teile auszutauschen.

Es besteht die Möglichkeit, den Stecker in ein radiales Durchgangsloch in der Wand des Zylindergehäuses einzustekken. Dadurch, daß diese Öffnung in einem drucklosen Bereich des Zylinders angeordnet ist, entstehen hier keine größeren Nachteile. Gemäß einer Weiterbildung der Erfindung wird aber entsprechend der Merkmalskombination nach Anspruch 7 empfohlen, die Aufnahmebohrung für den Stecker als (gestufte) Sackbohrung auszugestalten. Hierdurch wird die bearbeitete Innenwand des Zylinders nicht durchbohrt, so daß die für eine gute Wirkungsweise des Zylinders notwendige glatte Innenfläche durchgehend erhalten bleibt.

Die durch den erfindungsgemäßen Stellungsgeber gewonnenen elektrischen Signale lassen sich vergleichsweise leicht auswerten. Da das Ausgangssignal des Sensors einen etwa sinusförmigen Verlauf hat, wenn der Magnet das Hall-Element passiert, läßt sich in Abhängigkeit von der jeweiligen Ausgangsspannung auf die augenblickliche Lage des Kolbens schließen. Auf diese Weise kann ein Schaltvorgang vorgenommen werden, wenn der Kolben eine vorgegebene Wegstrecke zurückgelegt hat, wobei das Ausgangssignal des Sensors ausgehend von einem ersten vorgegebenen Schwellenwert einen vorgegebenen Schwellenwert erreicht hat.

Ein Ausführungsbeispiel der Erfindung wird nachfolgend anhand der Zeichnung erläutert. Darin zeigt
Fig. 1 einen mit dem erfindungsgemäßen Stellungsgeber versehenen Tandem-Hauptzylinder und
Fig. 2 und Fig. 3 in stark vereinfachter geschnittener Darstellung die Ausgestaltung eines an dem Kolben befestigten Magneten.

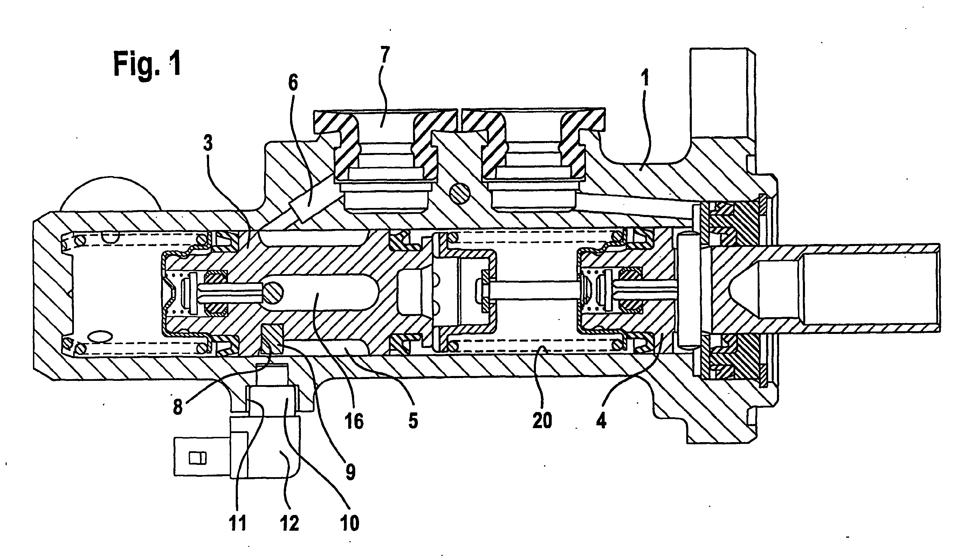

Aufbau und Wirkungsweise von Hauptzylindern ist in der Literatur hinreichend beschrieben worden (siehe beispielsweise Bremsen-Handbuch, in Autohausverlag GmbH Ottobrunn bei München, Auflagen 9.1) und soll daher an dieser Stelle nicht nochmals beschrieben werden. Im folgenden wird auf den Aufbau des in Fig. 1 dargestellten Hauptzylinders nur soweit eingegangen, wie dies im Zusammenhang mit der Erfindung notwendig ist.

In Fig. 1 ist ein Tandem-Hauptzylinder dargestellt, bei dem das Gehäuse 1 des Zylinders zwei hintereinander angeordnete Kolben 3,4 umgibt. Als Zylinder wird nachfolgend ein zylinderförmiger Hohlraum 20 bezeichnet, der durch das Gehäuse 1 begrenzt wird. Der vordere Kolben 3 besitzt eine ringförmige Ausnehmung 5, die über einen Belüftungskanal 6 mit der Anschlußöffnung 7 des nicht dargestellten Ausgleichsbehälters verbunden ist. Dadurch ist die ringförmige Ausnehmung 5 von Druck entlastet, so dass dort im wesentlichen der Umgebungsdruck des Gehäuses 1 herrscht. In den Boden der ringförmigen Ausnehmung 5 ist an geeigneter Stelle eine Zylinderöffnung 8 eingefügt, in die als Magnet ein magnetischer Metallstift 9 eingesetzt ist. Das Gehäuse 1 besitzt in Fig. 1 unten einen sich radial erstreckenden Ansatz, in den eine gestufte Sackbohrung 11 eingefügt ist. Diese Sackbohrung nimmt einen Stecker 12 auf, der an seinem in Fig. 1 oberen Ende das nicht dargestellte Hall-Element trägt. Wichtig ist, daß die Sackbohrung 11 nicht in den Zylinderinnenraum eintaucht, so dass die glatte Innenfläche des zylindrischen Innenraums nicht unterbrochen wird.

Hall-Element und Magnet 9 sind nun derart zueinander angeordnet, daß bei einer Bewegung des vorderen Kolbens 3 die von dem Hall-Element abgegebene Spannung, ausgehend von einem Maximum, absinkt, so dass eine in den Stecker 12 angeordnete Auswerteschaltung auf vorbestimmte Spannungswerte der fallenden Ausgangsspannung des Hall-Elements anspricht. Auf diese Weise erhält man am Ausgang des Steckers 12 einen Spannungssprung, wenn der Kolben 3 einen bestimmten Bereich des Kolbenweges durchläuft. Durch Veränderung der Ansprechwerte einer in der Auswerteschaltung befindlichen Triggerschaltung läßt sich der Spannungsverlauf gegenüber der Lage des Kolbens ausrichten, so daß sich recht genau justieren läßt, an welcher Stelle des Kolbenweges der Stellungsgeber anspricht, etwa um ein Bremslicht einzuschalten.

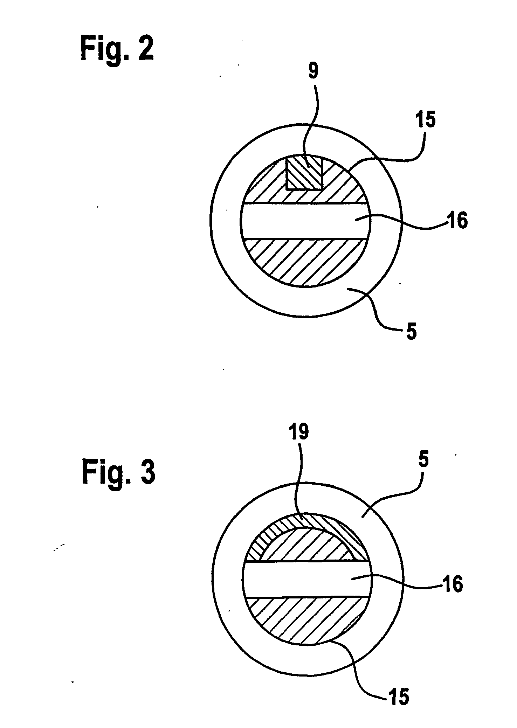

Die Figuren 2 und 3 zeigen mögliche Ausgestaltungen des in Fig. 1 dargestellten Magneten 9. Am Boden 15 der ringförmigen Ausnehmung 5 ist der Magnet 9 in Form eines zylinderförmigen Metallstifts eingefügt. In Fig. 2 und 3 ist noch ein Langloch 16 zu erkennen, welches in den vorderen Kolben 3 eingefügt ist.

Fig. 3 zeigt eine abgewandelte Ausgestaltung des Magneten in Form eines Ringsabschnittes 19, der in eine entsprechende Ausnehmung am Boden 15 der ringförmigen Ausnehmung 5 eingefügt ist.

Analog zu dem oben beschriebenen Sensor kann ein derartiger Sensor auch gegenüber dem hinteren Kolben 4 in das Gehäuse 1 wahlweise oder zusätzlich eingebaut werden. Wesentlich in dabei ist nur, dass dieser Sensor derart angeordnet wird, daß sich der mit dem Kolben 4 verbundene Magnet in dem druckfreien Bereich des Innenraums des Zylinders 1 befindet.

Die Erfindung lässt sich in daher kurz wie folgt beschreiben. Die Erzeugung des die Lage des Kolbens beschreibenden Signals erfolgt mittels berührungsloser Sensierung, vorzugsweise mittels eines Hall-Elementes. An einen der THz-Kolben wird ein metallisches Teil angebracht, dies kann auch ein Magnet sein. Der Bereich am THz-Kolben ist vorzugweise drucklos. Am THz-Gehäuse wird in dem selben Bereich ein Sensorelement (Hall-Sensor oder Hall-Schalter oder Element mit ähnlicher Signalerzeugung) angebracht. Vorzugsweise wird das Element in einem Bereich angebracht, der über den gesamten Hub des THz-Kolbens drucklos bleibt.
In einer Erweiterung der Erfindung besteht die Möglichkeit, die Funktionsgrenzen im eingebauten Zustand zu kalibrieren. Das Sensorelement kann mit einem fahrzeugseitigen Stecker kombiniert werden, und kann so ausgebildet werden, dass es im Fahrzeug austauschbar ist. Hierdurch ergibt sich eine hohe Sicherheit bei der Messung des Bewegungsstarts im THz. Hieraus resultiert wiederum ein direkt plausibles Signal. Die zugänglichkeit des Hauptzylinders im Fahrzeug ist sehr hoch. Eine Justiermöglichkeit ist auch nachträglich möglich, was sehr kostengünstig ist. Weiterhin entfallen störenden Kräfte am Pedal. Eine Signalerstellung ist möglich, ohne das geschlossene System im THz zu unterbrechen.

## Patentansprüche

1. Bremssystem insbesondere geregeltes Bremssystem für Kraftfahrzeuge, mit einer Kolben-Zylinder-Anordnung, mit einem Stellungsgeber zur Anzeige der Lage eines Kolbens (3) innerhalb eines Gehäuses (1) der Zylinder-Kolben-Anordnung, wobei an das Gehäuse (1) ein Hall-Element eines Hall-Sensors angefügt ist und innerhalb der Kolben-Zylinder-Anordnung ein magnetischer Bezirk (9) derart angeordnet ist, dass durch die Kolbenbewegung in dem Gehäuse (1) das Hall-Element anspricht, **dadurch gekennzeichnet, dass** ein Steuergerät und ein einziges Hall-Element zum Messen einer Magnetfeldänderung bei Kolbenbewegung vorgesehen sind, welches den Verlauf der Bewegung des Kolbens (3) als auch dessen Stellung sensiert, und die Kolben-Zylinder-Anordnung ein Tandem-Hauptzylinder mit einem ersten und einem zweiten Kolben (3,4) ist, wobei den Steuergerät ein Signal zur Verfügung gestellt wird, welches in direktem Zusammenhang zum Bewegungsverlauf des Kolbens (3) steht.

2. Bremssystem nach Anspruch 1 **dadurch gekennzeichnet, dass** der magnetische Bezirk (9) an der äußeren Mantelfläche (15) des Kolbens (3) angeordnet ist und vorzugsweise durch einen mit dem Kolben verbundenen Magneten (9) gebildet ist.

3. Bremssystem nach Anspruch 2 **dadurch gekennzeichnet, dass** der Magnet (9) in eine entsprechende Ausnehmung (8) des Kolbens (3) eingefügt ist, wobei die Form des Magneten (9) vorzugsweise durch einen radial eingesetzten magnetischen Kreiszylinder oder einen tangential angeordneten Ringabschnitt (19) gebildet ist.

4. Bremssystem nach einem der Ansprüche 1 bis 3,
**dadurch gekennzeichnet, dass** der Kolben (3) und/oder das den Zylinder bildende Gehäuse (1) aus einem nicht magnetischen Material insbesondere Aluminium gebildet ist.

5. Bremssystem nach einem der Ansprüche 1 bis 4, **dadurch gekennzeichnet, dass** der Magnet (9) in einem Abschnitt des Kolbens (3) an diesem angeordnet ist, der innerhalb des Zylinders mit dem Umgebungsdruck des Zylinders beaufschlagt ist.

6. Bremssystem nach einem der vorangegangenen Ansprüche, **dadurch gekennzeichnet, dass** das Hall-Element und vorzugsweise eine die Signale des Hall-Elementes verarbeitende Auswerteschaltung in einem Stecker (12) angeordnet sind und das Gehäuse (1) mit einer Steckeröffnung (11) zur Aufnahme mindestens eines Teils des Steckers (12) versehen ist.

7. Bremssystem nach Anspruch 6, **dadurch gekennzeichnet, dass** die Steckeröffnung (11) im wesentlichen eine von außen radial zugängliche Sackbohrung (11) ist, wobei an dem Gehäuse (1) vorzugsweise ein radialer Ansatz (10) zur Aufnahme der Steckeröffnung (11) vorgesehen ist.

8. Bremssystem nach einem der Ansprüche 6 oder 7, **dadurch gekennzeichnet, dass** die Auswerteschaltung mit einer Triggerschaltung versehen ist, die in Abhängigkeit von bestimmten Schwellenwerten der Spannung am Hall-Elemente auslöst, wobei zum Abgleich der Signalauslösung gegenüber der Kolbenstellung die Schwellwerte der Triggerschaltung einstellbar sind.

## Claims

1. Brake system, in particular a controlled brake system for motor vehicles, including a piston-and-cylinder assembly, with a position indicator for displaying the position of a piston (3) within a housing (1) of the piston-and-cylinder assembly, with a Hall element of a Hall sensor being joined on the housing (1) and a magnetic zone (9) being arranged in the piston-and-cylinder assembly in such a way that the Hall element responds to the movement of the piston in the housing (1),
**characterized in that** a control unit and one single Hall element to measure a change of the magnetic field upon a piston movement are provided, said Hall element sensing the course of the movement of the piston (3) and the latter's position, and the piston-and-cylinder assembly is a tandem master cylinder with a first and a second piston (3, 4), and a signal is sent to the control unit which is directly related to the course of movement of the piston (3).

2. Brake system as claimed in claim 1,
**characterized in that** the magnetic zone (9) is arranged at the outside peripheral surface (15) of the piston (3) and is preferably formed of a magnet (9) connected to the piston.

3. Brake system as claimed in claim 2,
**characterized in that** the magnet (9) is inserted into a corresponding recess (8) in the piston (3), with the magnet being preferably formed of a radially inserted magnetic circular cylinder (9) or a tangentially arranged annular portion (18).

4. Brake system as claimed in any one of claims 1 to 3,
**characterized in that** the piston (3) and/or the housing (1) forming the cylinder is made of a nonmagnetizable material, in particular aluminum.

5. Brake system as claimed in any one of claims 1 to 4,
**characterized in that** the magnet (9) is arranged in a portion of the piston (3) at said, and is acted upon by the ambient pressure of the cylinder inside the cylinder.

6. Brake system as claimed in any one of the preceding claims,
**characterized in that** the Hall element and preferably an evaluating circuit that processes the signals of the Hall element are arranged in a plug (12), and the cylinder housing (1) includes a plug opening (11) for receiving at least part of the plug (12).

7. Brake system as claimed in claim 6,
**characterized in that** the plug opening (11) essentially is a blind-end bore (11) that is accessible in a radial direction from outside, and the housing (1) preferably comprises a radial projection (10) to be received in the plug opening (11).

8. Brake system as claimed in any one of claims 6 or 7,
**characterized in that** the evaluating circuit includes a trigger circuit which is triggered in dependence on defined voltage threshold values at the Hall element, and the threshold values of the trigger circuit are adjustable in order to adapt the signal release in relation to the piston position.

## Revendications

1. Système de freinage, en particulier système de freinage régulé pour véhicule automobile, comportant un agencement cylindre-piston, comportant un transmetteur de position pour indiquer la position d'un piston (3) à l'intérieur d'un boîtier (1) de l'agencement cylindre-piston, sur le boîtier (1) étant rapporté un élément de Hall d'un capteur à effet Hall et à l'intérieur de l'agencement cylindre-piston une zone magnétique (9) étant disposée de manière que l'élément de Hall réagisse au mouvement du piston dans le boîtier (1), **caractérisé en ce qu'**il est prévu un appareil de commande et un seul élément de Hall pour mesurer une variation du champ magnétique lors du mouvement du piston, qui détecte l'allure du mouvement du piston (3) ainsi que sa position, et l'agencement cylindre-piston est un cylindre principal tandem avec un premier et un deuxième piston (3, 4), à l'appareil de commande étant fourni un signal qui est en dépendance directe de l'allure du mouvement du piston (3).

2. Système de freinage selon la revendication 1, **caractérisé en ce que** la zone magnétique (9) est disposée sur la surface d'enveloppe extérieure (15) du piston (3) et est formée de préférence par un aimant (9) relié au piston.

3. Système de freinage selon la revendication 2, **caractérisé en ce que** l'aimant (9) est inséré dans un évidement (8) correspondant du piston (3), la forme de l'aimant (9) étant définie de préférence par un cylindre circulaire magnétique, inséré radialement, ou par un segment d'anneau (19) disposé tangentiellement.

4. Système de freinage selon l'une des revendications 1 à 3, **caractérisé en ce que** le piston (3) et/ou le boîtier (1) formant le cylindre sont constitués d'un matériau non magnétique, en particulier d'aluminium.

5. Système de freinage selon l'une des revendications 1 à 4, **caractérisé en ce que** l'aimant (9) est disposé dans un segment du piston (3) qui, à l'intérieur du cylindre, est soumis à la pression ambiante du cylindre.

6. Système de freinage selon l'une des revendications précédentes, **caractérisé en ce que** l'élément de Hall et de préférence un circuit d'exploitation, traitant les signaux de l'élément de Hall, est disposé dans un connecteur (12) et le boîtier (1) est pourvu d'une ouverture pour connecteur (11) destinée à recevoir au moins une partie du connecteur (12).

7. Système de freinage selon la revendication 6, **caractérisé en ce que** l'ouverture pour connecteur (11) est sensiblement un trou borgne (11) accessible radialement de l'extérieur, sur le boîtier (1) étant prévu de préférence un appendice radial (10) pour recevoir l'ouverture pour connecteur (11).

8. Système de freinage selon l'une des revendications 6 ou 7, **caractérisé en ce que** le circuit d'exploitation est pourvu d'un circuit de déclenchement qui se déclenche en fonction de valeurs de seuil déterminées de la tension sur l'élément de Hall, les valeurs de seuil du circuit de déclenchement étant réglables pour égaliser le déclenchement des signaux par rapport à la position du piston.
